# DEMANDE DE BREVET EUROPEEN

(11) **EP 2 704 010 A1**
(43) Date de publication de la demande: **05.03.2014**
(21) Numéro de dépôt: 13182867.5
(22) Date de dépôt: 03.09.2013
(51) Int. Cl.: G06F 9/48

(54) **Procédé et dispositif de traitement de commandes dans un ensemble d'éléments informatiques**

(30) Priorité: 03.09.2012 FR 1258198
(71) Demandeur: BULL SAS, 78340 Les Clayes sous Bois (FR)
(72) Inventeur: Vigneras, Pierre, 91470 Angervilliers (FR); Girard, Marc, 92160 Antony (FR)
(74) Mandataire: Santarelli

(57) **Abrégé**

L'invention a notamment pour objet le traitement de commandes visant au moins un élément d'un cluster comprenant plusieurs éléments, ledit au moins un élément ayant un lien de dépendance selon ladite au moins une commande avec au moins un autre élément.

## Description

La présente invention concerne la gestion de systèmes informatiques et plus particulièrement un procédé et un dispositif de traitement de commandes dans un ensemble d'éléments informatiques tel qu'un cluster.

Le calcul haute performance, aussi appelé HPC (sigle de *High Performance Computing* en terminologie anglo-saxonne) se développe pour la recherche universitaire comme pour l'industrie, notamment dans des domaines techniques tels que l'aéronautique, l'énergie, la climatologie et les sciences de la vie. La modélisation et la simulation permettent en particulier de réduire les coûts de développement, d'accélérer la mise sur le marché de produits innovants, plus fiables et moins consommateurs d'énergie. Pour les chercheurs, le calcul haute performance est devenu un moyen d'investigation indispensable.

Ces calculs sont généralement mis en oeuvre sur des systèmes de traitement de données appelés clusters. Un cluster comprend typiquement un ensemble de noeuds interconnectés. Certains noeuds sont utilisés pour effectuer des tâches de calcul (noeuds de calcul), d'autres pour stocker des données (noeuds de stockage) et un ou plusieurs autres gèrent le cluster (noeuds d'administration). Chaque noeud est par exemple un serveur mettant en oeuvre un système d'exploitation tel que Linux (Linux est une marque). La connexion entre les noeuds est, par exemple, réalisée à l'aide de liens de communication Ethernet ou Infiniband (Ethernet et Infiniband sont des marques). Chaque noeud comprend généralement un ou plusieurs microprocesseurs, des mémoires locales ainsi qu'une interface de communication.

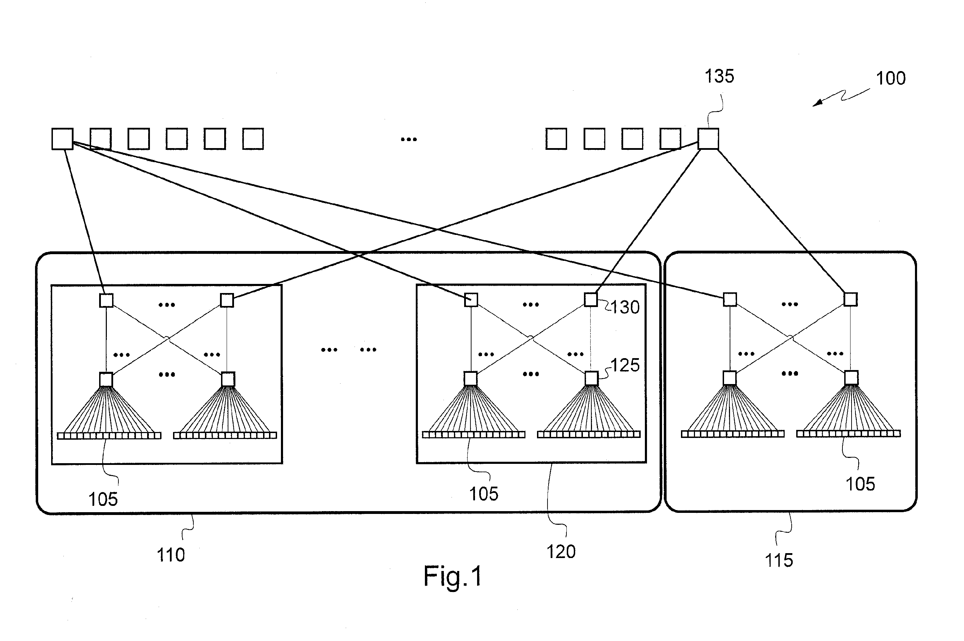

La figure 1 illustre schématiquement un exemple d'une topologie 100 d'un cluster, de type *fat-tree.* Ce dernier comprend un ensemble de noeuds génériquement référencés 105. Les noeuds appartenant à l'ensemble 110 sont ici des noeuds de calcul tandis que les noeuds de l'ensemble 115 sont des noeuds de service (noeuds de stockage et noeuds d'administration). Les noeuds de calcul peuvent être regroupés en sous-ensembles 120 appelés îlots de calcul, l'ensemble 115 étant appelé îlot de service.

Les noeuds sont reliés les uns aux autres par des commutateurs (appelés *switch* en terminologie anglo-saxonne), par exemple de façon hiérarchique. Dans l'exemple illustré sur la figure 1, les noeuds sont connectés à des commutateurs 125 de premier niveau qui sont eux-mêmes reliés à des commutateurs 130 de deuxième niveau qui sont à leur tour reliés à des commutateurs 135 de troisième niveau.

Les noeuds d'un cluster ainsi que d'autres éléments informatiques du cluster tels que les commutateurs sont souvent regroupés dans des armoires informatiques, aussi appelées *racks* en terminologie anglo-saxonne, qui peuvent elles-mêmes être regroupées par îlots. Par ailleurs, pour assurer un bon fonctionnement des éléments informatiques contenus dans une armoire informatique, cette dernière comprend généralement un système de refroidissement, par exemple une porte refroidissante (souvent appelée porte froide).

La gestion d'un cluster, notamment le démarrage, l'arrêt ou la mise à jour logicielle d'éléments informatiques du cluster, est typiquement réalisée à partir de noeuds d'administration à l'aide de processus prédéterminés ou directement par un opérateur. Certaines opérations telles qu'une mise en route ou une mise à l'arrêt de l'ensemble du cluster, d'îlots ou d'armoires informatiques, peuvent également être réalisées manuellement, par noeud ou par armoire informatique.

Il a été observé que si les problèmes liés à la gestion de clusters n'ont généralement pas d'influence directe sur les performances d'un cluster, ils peuvent être critiques. Ainsi, par exemple, si un problème de refroidissement d'une salle abritant des armoires informatiques est détecté, il est souvent nécessaire d'arrêter rapidement au moins partiellement le cluster pour éviter une surchauffe d'éléments qui pourrait notamment conduire à la détérioration de matériel et/ou la perte de données. Toutefois l'arrêt ou le démarrage des éléments informatiques d'un cluster peut être complexe. D'abord l'ensemble d'éléments informatiques peut être constitué d'un nombre très important d'éléments informatiques de types différents. Chaque type d'élément informatique peut avoir des spécificités particulières liées à son arrêt ou démarrage.

Il existe donc un besoin pour améliorer la gestion de clusters, notamment pour traiter des commandes d'administration.

L'invention permet de résoudre au moins un des problèmes exposés précédemment.

L'invention a ainsi pour objet un procédé, pour ordinateur, de traitement d'une commande globale visant une pluralité d'éléments informatiques d'un ensemble d'éléments informatiques, ladite commande globale visant l'exécution d'une action respective sur chaque élément informatique de la pluralité d'éléments informatiques, chaque élément informatique ayant un type d'élément, les liens de dépendance entres les éléments selon la commande étant définis par des règles de dépendance, ce procédé comportant pour chaque action visée :
- identification de l'élément informatique visé par l'action ;
- identification, selon au moins une règle de dépendance liée à la commande, des éléments informatiques de la pluralité d'éléments informatiques qui doivent être traités avant l'élément informatique visé ;
- identification, pour chaque type d'élément qui doit être traité préalablement, d'une pondération représentative de la proportion des éléments informatiques de ce type pour laquelle l'action correspondante doit être achevée avec succès avant d'exécuter l'action visée ; et
- exécution de l'action visée sur ledit élément visé dans le cas où pour chaque type d'élément qui doit être traité préalablement les actions correspondantes sont achevées avec succès pour une proportion des éléments informatiques de ce type au moins égale à la pondération respective.

Le procédé selon l'invention permet de traiter des commandes dans un cluster hétérogène en respectant les liens de dépendances qui pourraient exister entre les différents éléments du cluster. Puisque les dépendances sont associées à des pondérations, l'importance de chaque dépendance peut être prise en compte. Ce procédé peut faciliter l'administration du cluster, notamment en réduisant le nombre et les noms de commandes. L'achèvement avec succès d'une action peut être indiqué par un code particulier ou par l'absence d'une code d'erreur par exemple.

De façon avantageuse, l'exécution d'une action sur un premier élément informatique génère une contribution, cette contribution étant traitée pour déterminer si l'action sur un élément informatique qui dépend du premier élément peut être exécutée ou pas. Le procédé selon le mode de réalisation de l'invention permet ainsi de générer, à partir d'une commande et d'identifiants d'éléments d'un cluster, une séquence d'instructions satisfaisant des contraintes relatives à des actions visant des éléments de ce cluster.

Selon un mode de réalisation les actions visées par la commande globale sont traitées selon une séquence d'instructions ordonnée déterminée à partir d'un graphe de dépendances, le graphe de dépendances étant généré à partir des règles de dépendances et une liste des éléments informatiques visés par la commande globale.

De façon avantageuse, une fonction d'identification d'éléments et une règle de dépendance sont associées à ladite au moins une règle de dépendance identifiée, le procédé comprenant en outre une étape d'identification d'au moins ledit autre élément à partir de ladite fonction d'identification, ledit graphe de dépendances étant généré à partir dudit au moins un élément identifié, dudit au moins un autre élément, de ladite au moins une règle de dépendance identifiée et de ladite règle de dépendance associée à ladite au moins une règle de dépendance identifiée. Le procédé selon l'invention permet ainsi, de façon récursive, de déterminer l'ensemble des éléments impliqués dans l'exécution de la commande traitée, selon différents niveaux de granularité des éléments (matériels ou logiciels).

Selon un mode de réalisation particulier, le procédé comprend en outre une étape d'affichage d'informations relatives audit graphe de dépendances, ladite étape de génération de ladite séquence d'instructions étant effectuée en réponse à une validation desdites informations affichées relatives audit graphe de dépendances. Ainsi, conformément au procédé selon l'invention, un utilisateur peut visualiser le graphe de dépendances afin, notamment, de le valider, le modifier ou modifier des règles de dépendances pour régénérer, le cas échéant, un nouveau graphe de dépendances.

Toujours selon un mode de réalisation particulier, ladite étape de génération d'un graphe de dépendances est récursive et comprend les étapes suivantes,
- création d'un graphe de dépendances initial comprenant au moins ledit au moins un élément ;
- sélection d'un élément dans ledit graphe de dépendances
- identification d'au moins un élément dont dépend ledit élément sélectionné au regard d'une règle de dépendance ; et,
- modification dudit graphe de dépendances selon ledit élément sélectionné et ledit au moins un élément identifié dont dépend ledit élément sélectionné au regard d'une règle de dépendance.

Le procédé selon ce mode de réalisation de l'invention permet ainsi de construire simplement et efficacement un graphe de dépendances à partir duquel peut être générée une séquence d'instructions satisfaisant des contraintes relatives à des actions visant des éléments de ce cluster pour traiter une commande.

De façon avantageuse, ladite étape de sélection d'un élément dans ledit graphe de dépendances est basée sur un graphe de règles, ledit graphe de règles étant une représentation ordonnée de ladite au moins une règle de dépendance identifiée et de règles de dépendances directement ou indirectement associées à ladite au moins une règle de dépendance identifiée.

Le procédé selon ce mode de réalisation l'invention permet ainsi de trouver simplement et efficacement un ordre d'exécution d'actions sur des éléments d'un cluster selon des contraintes prédéterminées.

Selon un mode de réalisation particulier, ladite étape de génération d'une séquence d'instructions comprend la génération d'au moins un groupe d'instructions pour chaque niveau dudit graphe de dépendances. Le procédé selon l'invention permet ainsi une gestion intelligente de pannes pour éviter la perte de données et l'endommagement de matériel tout en exécutant autant que possible les instructions définies selon la commande visée.

Toujours selon un mode de réalisation particulier, ladite séquence d'instructions est générée sous forme d'un fichier de type XML, une balise de niveau étant associée à chaque niveau dudit graphe de dépendances et une balise de groupe étant associée à chaque groupe d'instructions pour chaque balise de niveau correspondant à un niveau pour lequel il existe au moins deux groupes d'instructions distincts. Le procédé selon l'invention offre ainsi une lecture aisée des séquences d'instructions liées à une commande qui peuvent alors être vérifiées et/ou modifiées simplement tout en limitant les risques d'erreurs pour un utilisateur.

Toujours selon un mode de réalisation particulier, le procédé comprend en outre une étape d'exécution de ladite séquence d'instructions.

Toujours selon un mode de réalisation particulier, le procédé comprend en outre une étape d'affichage d'informations relatives à ladite séquence d'instructions, ladite étape d'exécution de ladite séquence d'instructions étant effectuée en réponse à une validation desdites informations affichées relatives à ladite séquence d'instructions. Ainsi, conformément au procédé selon l'invention, un utilisateur peut visualiser ladite séquence d'instructions afin, notamment, de la valider, la modifier ou modifier des règles de dépendances ou le graphe de dépendances utilisé pour régénérer, le cas échéant, une nouvelle séquence d'instructions.

De façon avantageuse, des instructions relatives à deux niveaux distincts du graphe de dépendances sont exécutées de façon séquentielle et selon lequel des instructions de groupes d'instructions distincts d'un même niveau du graphe de dépendances sont exécutées de façon parallèle. Le procédé selon l'invention permet en outre d'effectuer en parallèle des actions visant plusieurs ensembles d'éléments afin, notamment, d'optimiser le temps d'exécution d'une commande.

L'invention a également pour objet un programme d'ordinateur comprenant des instructions adaptées à la mise en oeuvre de chacune des étapes du procédé décrit précédemment lorsque ledit programme est exécuté sur un ordinateur et un dispositif comprenant des moyens adaptés à la mise en oeuvre de chacune des étapes du procédé décrit précédemment. Les avantages procurés par ce programme d'ordinateur et ce dispositif sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :
- la figure 1 illustre un exemple de topologie d'un cluster ;
- la figure 2 illustre un exemple de mise en oeuvre de certaines phases du procédé selon l'invention ;
- la figure 3 représente un exemple de relations de dépendances entre des éléments d'un cluster ;
- la figure 4 illustre un exemple de graphe de règles ;
- la figure 5 illustre certaines étapes d'un exemple d'algorithme récursif utilisé pour générer un graphe de dépendances conformément à l'invention ;
- la figure 6, comprenant les figures 6a à 6f, illustre la mise en oeuvre de l'algorithme décrit en référence à la figure 5 selon l'exemple décrit en référence aux figures 3 et 4 ; et,
- la figure 7 illustre un exemple de dispositif adapté à mettre en oeuvre l'invention ou une partie de l'invention.

L'invention a notamment pour objet la génération de séquences d'instructions permettant l'exécution de commandes visées à un ensemble d'éléments informatiques tels qu'un cluster ou une partie d'un cluster. Dans le contexte de l'invention le terme élément informatique peut signifier un élément de logiciel ou un élément matériel d'informatique tel qu'un noeud, un commutateur ou une porte froide par exemple. De telles commandes sont, par exemple, l'arrêt ou la mise en route d'un cluster ou d'une partie d'un cluster telle que des armoires informatiques ou des îlots (ensemble d'armoires informatiques). L'invention selon des modes de réalisation de l'invention permet de limiter le temps d'exécution de ces commandes et faciliter la maintenance de clusters, en tenant compte des spécificités de chaque équipement.

Le procédé selon un mode particulier de l'invention comprend essentiellement trois phases, la génération d'un graphe de dépendances, la génération d'une séquence d'instructions et l'exécution de cette séquence d'instructions. Un graphe de dépendances est ici obtenu à partir de règles de dépendances, d'une liste d'éléments d'un ensemble d'éléments tel qu'un cluster sur lesquels une commande globale doit être appliquée ainsi que de la configuration de ces éléments. Ce graphe peut, par exemple, indiquer qu'une porte froide d'une armoire informatique donnée ne peut être arrêtée qu'après que tous les serveurs contenus dans cette armoire informatique aient été arrêtés ou qu'après que une proportion donnée des serveurs contenus dans cette armoire informatique aient été arrêtés.

La séquence d'instructions générée est conforme aux contraintes de dépendances exprimées dans le graphe de dépendances. Ainsi, à titre d'illustration, cette séquence peut indiquer que des noeuds donnés peuvent être arrêtés en parallèle tandis que des noeuds donnés et une porte froide donnée doivent être arrêtés de façon séquentielle. Elle est avantageusement optimisée selon les instructions pouvant être exécutées de façon parallèle. Enfin, l'exécution de cette séquence d'instructions tient compte, de préférence, des erreurs. Ainsi, par exemple, si une porte froide n'a pas été correctement arrêtée, il convient de ne pas éteindre le switch permettant de la relier au réseau d'administration sans quoi la cause du problème ne pourra être corrigée faute de connexion. Dans un autre exemple si une porte froide d'une armoire informatique n'a pas été correctement démarrée, il convient de ne démarrer que 50% des noeuds de calcul contenus dans l'armoire.

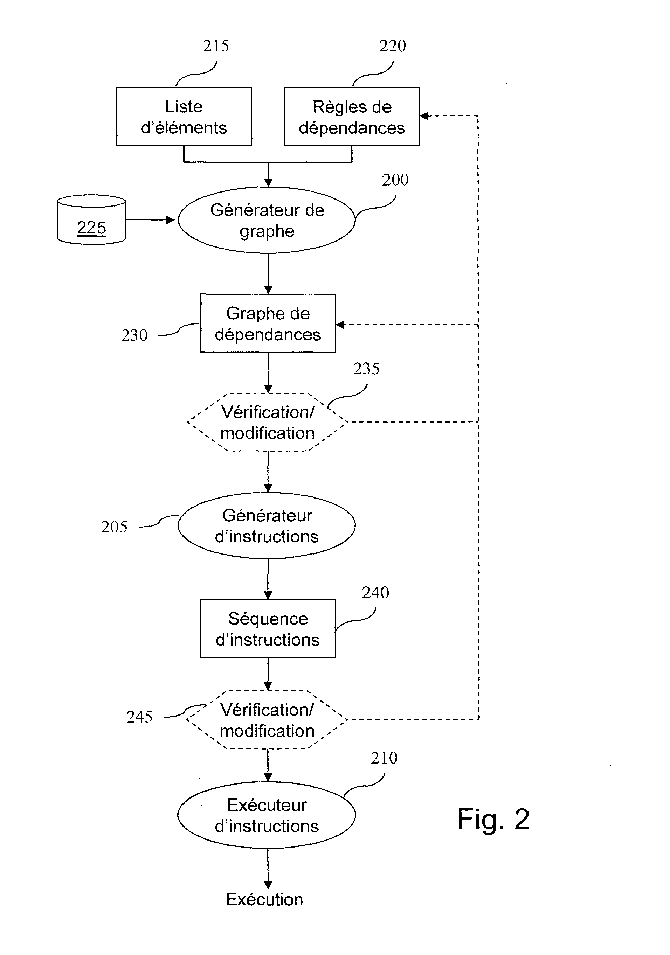

La figure 2 représente un exemple de mise en oeuvre de ces trois phases, implémentées dans un générateur de graphe de dépendances 200, un générateur d'instructions 205 et un exécuteur d'instructions 210, respectivement.

Le générateur de graphe de dépendances 200 repose ici sur l'utilisation d'une liste d'éléments, référencée 215, de règles de dépendances, référencées 220, et de données 225 caractérisant les éléments et les liens les unissant. Il permet d'obtenir un graphe de dépendances 230 à partir duquel peuvent être générées des séquences d'instructions.

Le graphe de dépendances est avantageusement obtenu à l'aide, notamment, d'un graphe de règles, caractérisant les liens de dépendances entre les règles d'un même ensemble de règles de dépendances, qui permet d'identifier des racines pouvant être utilisées pour déterminer un ordre d'application d'actions à des éléments, comme décrit ci-après.

Le graphe de dépendances 230 peut être vérifié par un utilisateur (étape 235) qui peut le valider, le modifier ou modifier ou ajouter des règles de dépendances pour re-générer un nouveau graphe de dépendances.

Le graphe de dépendances 230 est utilisé par le générateur d'instructions 205 pour générer une séquence d'instructions 240 permettant d'effectuer la commande globale d'administration visée sur les éléments déterminés selon des règles de dépendances identifiées selon cette commande.

La séquence d'instructions 240 peut être vérifiée par un utilisateur (étape 245) qui peut la valider, la modifier, modifier le graphe de dépendances 230 ou modifier ou ajouter des règles de dépendances pour re-générer un nouveau graphe de dépendances et re-générer une nouvelle séquence d'instructions.

La séquence d'instructions 240 peut alors être exécutée par le générateur d'instructions 210. Une séquence d'instructions peut être générée lorsqu'une commande globale d'administration visant un ensemble d'éléments déterminés doit être exécutée ou de façon anticipée pour permettre son exécution lorsqu'une commande globale visant un ensemble d'éléments déterminés doit être exécutée sans qu'il soit nécessaire de générer la séquence d'instructions correspondante (la séquence d'instructions peut ainsi être exécutée immédiatement).

Il est observé ici que si l'algorithme décrit en référence à la figure 2 permet à un utilisateur de contrôler chaque phase, les phases de génération de graphe de dépendances, de génération de séquences d'instructions et d'exécution de ces séquences peuvent être exécutées les unes à la suite des autres, de façon transparente pour l'utilisateur.

La liste d'éléments 215 identifie l'ensemble des éléments sur lesquels s'applique une commande d'administration à traiter. A titre d'illustration, cette liste peut s'exprimer par un ensemble d'expressions de la forme suivante :
*componentNamePrefix[a-b, c-d, ...] #type @ category* où
- *componentNamePrefix[a-b, c-d,* ...*]* est une notation standard contractée pour designer un ensemble de noms d'éléments ayant le préfixe *componentNamePrefix* et un suffixe égale à une valeur prise dans les intervalles [a-b], [c-d], etc. ;
- *type* est une description de l'élément considéré. Ainsi, par exemple, si l'élément considéré est un noeud, le type peut être égal à *compute* pour indiquer qu'il s'agit d'un noeud de calcul. Les types d'éléments sont décrits plus en détail ci-après ; et,
- *category* est la catégorie de l'élément considéré par rapport aux catégories définies dans une base de données définissant les éléments d'un cluster (généralement appelée *cluster database* ou *clusterDB).* A titre d'illustration, les catégories définies dans la *clusterDB* utilisée sont par exemple les suivantes,
   o *hwmanager ou hw* (cette catégorie désigne des contrôleurs d'éléments matériels, notamment de type BMC (sigle de *Baseboard Management Controller* en terminologie anglo-saxonne)) ;
   o *disk-array* ou *da* (cette catégorie désigne typiquement des baies de stockage) ;
   o *switch* (cette catégorie désigne typiquement des commutateurs, par exemple de commutateurs de type Ethernet, Infiniband ou PDU) ;
   o *node* (cette catégorie désigne typiquement des noeuds, par exemple des noeuds de calcul, d'entrée/sortie ou de gestion) ;
   o *hw_group* et *rack* (ces catégories désignent des ensembles d'éléments matériels) ; et,
   o soft (cette catégorie désigne tous les éléments logiciels du cluster, par exemple un serveur de type nfs, sigle de *Network File System* en terminologie anglo-saxonne).

Les éléments du cluster peuvent être définis de façon différente.

Il est observé que si la partie *type@category* est manquante, elle peut généralement être retrouvée, par exemple à partir de la *clusterDB,* une erreur étant générée si l'élément considéré n'est pas retrouvé. Cependant, pour éviter d'interroger la *clusterDB* de façon fréquente, ce qui peut être préjudiciable en termes de temps de traitement, il est préférable de spécifier ce paramètre dans la liste des éléments.

Un exemple de liste d'identifiants d'éléments est donné en annexe A1. Selon cet exemple, la première expression vise les éléments nommés *Calcul_1, Calcul_2* et *Calcul_3,* correspondant à des îlots (*islet*) et définis dans la *clusterDB* par la catégorie *hw_group.* De même, la quatrième expression vise un ensemble de neuf noeuds nommés *bullx12 à bullx20* qui sont ici des noeuds de calcul (*#compute@node*).

Les règles de dépendances 220 sont les règles de dépendances devant être appliquées aux éléments visés par la liste d'éléments 215. Elles permettent d'associer des actions à des éléments d'un cluster et d'identifier des dépendances entre des éléments d'un cluster selon des actions requises. Les règles de dépendances 220, identifiées par un même nom ou un même identifiant de commande globale d'administration, forment un *RuleSet,* c'est-à-dire un ensemble de règles devant être potentiellement appliquées (selon les éléments visés) pour exécuter une commande globale d'administration appelée.

Il est observé ici que si une commande globale d'administration vise directement un ensemble de règles de dépendances, elle peut également viser, de façon indirecte, d'autres règles de dépendances qui sont elles-mêmes liées directement ou indirectement aux règles de dépendances directement visées par la commande d'administration.

Un exemple de règles de dépendances est illustré en annexe A2. Ces règles de dépendances sont ici représentées sous forme d'un tableau dans lequel chaque ligne correspond à une règle de dépendances. Comme indiqué précédemment, une commande d'administration correspond ici à une sélection initiale de règles de dépendances. Ainsi, par exemple, la commande d'administration appelée « *stop »* fait appel à plusieurs règles de dépendances pouvant s'appliquer à des éléments de différents types.

Les colonnes de ce tableau sont ici définies de la façon suivante :
- *RuleSet* : nom de la commande globale d'administration appelant la règle de dépendances faisant l'objet de la ligne considérée ;
- *Symbolic name* : nom symbolique unique de la règle de dépendances correspondant à l'action/l'élément informatique faisant l'objet de la ligne considérée ;
- *Comp. type* : type de l'élément sur lequel s'applique la règle de dépendances. La syntaxe utilisée ici est similaire à celle décrite précédemment, de la forme *type@category*. Plusieurs types d'éléments peuvent être concernés par une règle de dépendances. Dans ce cas, ces types sont séparés par un symbole logique, par exemple « *OR* » ou « | ». Certaines expressions telles que « *all* » peuvent être utilisées pour désigner plusieurs types sans qu'il soit nécessaire de les définir un par un. Les catégories sont, par exemple, celles définies précédemment (*hwmanager* ou *hw, disk-array, switch, node, hw_group, rack* et *soft*), les types d'éléments pouvant être, par exemple, les suivants,
   o *compute, login, io* et *mngt* pour caractériser une fonction telle que, par exemple, *compute@node* désigne un noeud de calcul, *login@node* désigne un noeud de connexion, *io@node* désigne un noeud d'entrée/sortie et *mngt@node* désigne un noeud d'administration ;
   o *a*// désigne tous les types d'une catégorie donnée, par exemple *all@disk_array* désigne l'ensemble des baies de stockage ;
   o *colddoor* vise les portes froides. Une porte froide étant un élément matériel, elle est désignée par *colddoor*@*hwmanager* ;
   o *eth, ib* et *pdu* vise des types de commutateurs tels que, par exemple, *eth*@*switch* désigne un commutateur Ethernet, *ib*@*switch* désigne un commutateur Infiniband et *pdu*@*switch* désigne un commutateur PDU ; et
   o *nfsd, sshd* et *lustre* désignent des éléments logiciels tels que, par exemple *nfsd*@*soft* désigne un démon NFS, *sshd*@*soft* désigne un serveur SSH et *lustre*@*soft* désigne un démon *lustre* (*lustre* est une marque désignant ici un système de fichiers distribué).
- *Filter :* filtre ayant une expression de la forme « *%var =~ regexp* » ou *« %var !~ regexp* », utilisé pour sélectionner les éléments sur lesquels l'action liée à la règle de dépendance doit être appliquée (l'application d'un filtre est décrit ci-dessous) ;
- *Action* : action visée par la commande d'administration globale devant être exécutée pour les éléments sélectionnés (l'expression « *%comp.* » est remplacée par le nom de l'élément considéré). Comme décrit ci-dessous, selon la valeur du code de retour de l'action, après son exécution, le générateur du graphe de dépendances peut, selon le mode d'exécution choisi, indiquer une erreur et s'arrêter ou continuer l'exécution d'instructions ;
- *DepsFinder :.* nom d'un script à appeler qui, pour des éléments donnés (définis par *Comp. type* et *Filter*), retourne une liste de paires (*x, t*) où x représente le nom d'un élément qui doit être traité, typiquement arrêté ou démarré, avant les éléments donnés ou les éléments correspondant au type donné d'éléments et où t représente le type de cet élément. Ce type est, de préférence, l'un des types décrit précédemment. Une expression particulière, « *none* », est avantageusement utilisée lorsqu'il n'existe pas de dépendance. Cette expression particulière indique que le ou les éléments considérés ne dépendent pas d'autres éléments (pour le traitement de la commande d'administration visée) ;
- *DependsOn* : liste de noms symboliques de règles de dépendances (compris dans la colonne *Symbolic name*) faisant références à d'autres éléments ou types d'éléments identifiés par le champ *DepsFinder.* Cette liste inclut les règles de dépendances correspondant aux éléments ou types d'éléments dont dépend l'élément informatique sur lequel s'applique la règle de dépendance considérée pour l'exécution de l'action donnée. Une expression particulière, « *none* », est de préférence utilisée lorsqu'il n'existe pas de dépendance. Cette expression est ignorée si l'expression « *DepsFinder* » est « *none* ». Les règles de dépendances visées ici appartiennent, de préférence, à l'ensemble de règles de dépendances visées par la commande d'administration considérée.

A chaque type d'élément informatique, dont dépend l'élément informatique considéré, est attribuée une pondération correspondante. Cette pondération est représentative d'une proportion des éléments informatiques de ce type d'élément, dont dépend l'élément informatique considéré, pour laquelle l'exécution de l'action correspondante doit être achevée avec succès avant l'exécution de l'action sur l'élément informatique considéré.

Cette caractéristique permet d'exécuter une action sur un élément informatique considéré même si une proportion des actions exécutées sur les éléments informatiques dont il dépend n'est pas achevée avec succès selon le type d'élément. Par exemple, un élément de type « cold door » peut être arrêté si une des deux noeuds de calcul dont il dépend n'est pas arrêtée.

La pondération est représentée par un pourcentage de 0% à 100% Dans cet exemple une pondération de 0% indique qu'il n'y a pas de dépendance et que l'action considérée peut être exécutée sans achèvement de l'action correspondante sur des éléments informatiques de ce type, dont dépend l'élément informatique considéré.

Un exemple de type d'élément et sa pondération est donné ci-dessous pour un élément informatique considéré

| | | | |
|---|---|---|---|
| *Commande Globale STOP* | *Régle de dépendance ColDooroff* | *Type d'élément Colddoor* | *Dépendances cnode:80, ionode:100, sw:0* |

Selon cet exemple, l'action liée à la commande globale « STOP » vise l'arrêt d'une porte froid « cold door ». Pour que la porte froide puisse être arrêtée, une action correspondante (un arrêt) doit être achevée avec succès sur au moins 80% des noeuds de calcul dont dépend la porte froide, et sur tous les noeuds d'entrée/sortie (100%) dont elle dépend. En revanche l'arrêt des commutateurs (sw) dont dépend la porte froide n'est pas nécessaire pour que la porte froide soit arrêtée.

Dans un mode de réalisation particulier, l'exécution de chaque action fournit une contribution indiquant si l'exécution de l'action a été achevée avec succès ou pas. Cette contribution peut prendre la forme d'une valeur du code de retour de l'action. La contribution peut être utilisée ensuite pour déterminer si les critères indiqués par les pondérations liées aux actions suivantes sont satisfaits ou pas.

A titre d'illustration un exemple d'une séquence des actions est donné en annexe A4 ;

La séquence des actions est ordonnée selon le graphe des dépendances généré dans la première phase du procédé. Dans cet exemple :
- l'exécution de l'action 1 fournit une contribution « a » lorsque l'action identifiée par « 1 » est exécutée avec succès
- l'action 2 sera exécutée suite à l'exécution de l'action 1 même si l'exécution de l'action 1 n'a pas été achevée avec succès (pas de contribution « a ») puisque la pondération de dépendance pour la contribution « a » est égale à 0%. Cette dépendance est catégorisée comme une dépendance faible. Une dépendance faible permet de spécifier une séquentialité inconditionnelle. Quel que soit le code de retour de l'action précédente une action avec une dépendance faible de cette action précédente sera systématiquement exécutée après l'action précédente. La condition de terminaison (avec ou sans succès) devient une condition nécessaire et suffisante. L'exécution avec succès de l'action 2 fournit une contribution « b ».
- l'action 3 a une forte dépendance de la contribution « a » fournie par l'exécution de l'action 1. Cette forte contribution est indiquée par une pondération de 100% de la contribution « a ».Par conséquent l'action 3 ne sera pas exécutée si l'action 1 n'a pas été exécutée avec succès. Une dépendance forte permet de spécifier une séquentialité conditionnelle. L'exécution avec succès de l'action précédente, dont une action, dépend est une condition nécessaire pour l'exécution de cette action. L'exécution avec succès de l'action 3 fournit également une contribution « b ».
- l'action 4 a une pondération de 50% pour la contribution « a » indiquant que l'action 4 sera exécutée si 50% des actions, qui fournissent une contribution « a », dont elle dépende sont exécutée avec succès. Puisque dans cet exemple la contribution « a » n'est fournie que par une seule action, l'action 1, le facteur ½ de 50% pondération est arrondi à 1, c'est-à-dire 100% et par conséquent l'action 4 ne sera pas exécutée si l'action 1 n'a pas été exécutée avec succès ; L'exécution avec succès de l'action 4 fournit une contribution « c ».
- l'action 5 a une forte dépendance qui correspond à un état par défaut lorsque les pondérations de dépendances ne sont pas précisées. Par conséquent l'action 5 ne sera exécutée que dans le cas où les exécutions des actions 1 à 4 sont achevées avec succès. L'exécution avec succès de l'action 5 fournit une contribution « d ».
- l'action 6 a une forte dépendance de la contribution b et donc des exécutions des actions 2 et 3, qui fournissent chacune une contribution « b ». Par conséquent l'action ne sera exécutée que si les actions 2 et 3 ont été exécutées avec succès. En revanche l'action 6 a une faible dépendance de la contribution « c » et donc de l'exécution de l'action 4 qui fournit la contribution « c ». Par conséquent si l'exécution de l'action 4 n'a pas été achevée avec succès, l'action 6 pourra toujours être exécutée. L'exécution avec succès de l'action 6 fournit également une contribution « d».
- l'action 7 a une faible dépendance de la contribution « b » résultant des exécutions des actions 2 et 3 et une forte dépendance de la contribution « c » résultant de l'exécution de l'action 4. Par conséquent l'exécution l'action 7 nécessite l'achèvement de l'exécution de l'action 4 mais ne nécessite pas l'achèvement des actions 2 et 3. L'exécution avec succès de l'action 7 fournit une contribution « e ».
- l'action 8 dépend de l'exécution de l'action 7 puisque elle nécessite une contribution « e » de 100%, et le succès de l'exécution de l'action 5 et/ou 6 puisqu'elle nécessite une contribution « d » de 50%. L'achèvement de l'exécution de l'action 1 n'est pas nécessaire pour l'exécution de l'action 8. L'exécution avec succès de l'action 8 fournit également une contribution « e ».
- l'action 9 dépend de l'achèvement de l'exécution de l'action 1 puisque la contribution de « a » doit être au moins égale à 50% et seule l'action 1 fournit la contribution « a », de l'exécution de l'action 2 et/ou l'action 3 puisque la contribution de « b » doit être au moins égale à 50%; et l'achèvement de l'exécution de l'action 4 pour atteindre une contribution « c » de 50%.
- l'action 10 a une forte dépendance qui correspond à un état par défaut lorsque les pondérations de dépendances ne sont pas précisées. Par conséquent l'action 10 ne sera exécutée que dans le cas où les exécutions de toutes les actions 1 à 9 sont achevées avec succès

*Comments* : commentaires sans incidence sur la règle de dépendances.

Il est observé ici que l'ensemble des règles de dépendances peut, par exemple, être mémorisé dans la *clusterDB.*

Comme indiqué précédemment, l'application d'une règle de dépendances peut comprendre une étape de filtrage selon un filtre pouvant être exprimé, par exemple, sous la forme « *%var =~ regexp »* ou « *%var !~ regexp* » où %var est remplacé par sa valeur durant l'évaluation de l'expression (par exemple *%id, %ruleset* et *%comp.*), l'opérateur =~ indique que l'élément (*%comp.*) n'est filtré que si l'expression est vérifiée alors que l'opérateur!~ indique que l'élément n'est filtré que si l'expression n'est pas vérifiée. Si l'expression ne commence pas par une variable « *%var* » connue, l'expression est interprétée comme une commande de type *shell* qui, lorsqu'elle est appelée, précise si l'élément donné doit être retenu (code de retour égal à zéro) ou rejeté (code de retour différent de zéro). Deux expressions particulières « *all* » et « *null* » sont réservées pour accepter tous les éléments et pour les rejeter, respectivement. A titre d'illustration, pour accepter tous les éléments dont le nom contient « *bullx104* », l'expression « *%name =~ bullx104* » peut être utilisée.

A titre d'illustration, la deuxième règle de dépendances données en annexe A2, appelée « *nodeOn* », vise une commande (*RuteSet*) de démarrage (*start*) pour des éléments de type noeuds de calcul (*compute@node*). Un filtre est utilisé pour ne sélectionner que les noeuds de calcul ne contenant pas le nom *compute12* (*%name !~ compute12*)*.* La règle de dépendances *nodeOn* fait appel à la fonction *nodectrl* avec les paramètres *poweron* et *%comp.* ayant pour objet de démarrer les noeuds de calcul sélectionnés. La règle de dépendances *nodeOn* fait appel au script *find_nodeon_deps* pour identifier tous les éléments informatiques dont dépend un élément de type noeud de calcul pour l'exécution de l'action associée à la règle de dépendances *nodeOn.* qui doivent être traités (ici démarrés) avant chaque noeud de calcul considéré.

Dans cet exemple il est précisé que l'exécution de la règle de dépendances *nodeon* dépend de l'exécution de la règle de dépendances *ColddoorStart* visant le démarrage d'une porte froide. La pondération attribuée à la règle de dépendances *ColddoorStart* est dans cette exemple 100%.En d'autres termes, un noeud de calcul sélectionné ne peut être démarré que si la porte froide de l'armoire informatique dans laquelle il se trouve a été préalablement démarrée avec sucès. La règle de dépendances *ColddoorStart* s'applique aux éléments retournés par le script *DepsFinder* correspondant à la règle de dépendance *nodeOn.*

De même, la troisième règle de dépendances donnée en annexe A2, appelée « *colddoorOff* », vise une commande (*RuleSet*) d'arrêt (*stop*) pour des éléments matériels de type porte froide (*colddoor@hw*). Aucun filtre n'est ici utilisé. Par conséquent, toutes les portes froides sont visées par cette règle de dépendances. Cette dernière fait appel à la fonction *bsm_power* avec les paramètres *off %comp.* ayant pour objet d'arrêter une porte froide. La règle de dépendances *colddoorOff* fait appel au script *find_coiddooroff_dep* pour identifier tous les élément informatiques de l'ensemble qui doivent être traités (ici arrêtés) avant la porte froide considérée. Par ailleurs, il est précisé que l'exécution de la règle de dépendances *coldoorOff* dépend de la règle de dépendances *nodeOff* visant l'arrêt de noeuds. Dans cet exemple la pondération attribuée à la règle de dépendances *nodeOff* est de 50%. En d'autres termes, une porte froide ne peut être arrêtée que si au moins 50% des noeuds liés à la porte froide ont été préalablement arrêtés. Autrement dit si l'arrêt de 50% des noeuds identifiés n'est pas achevé, la porte froide considérée peut être toujours arrêtée.

De plus, si un noeud ne peut être arrêté, il est néanmoins possible d'arrêter les portes froides des armoires informatiques ne comprenant pas de noeud.

Lorsqu'une commande (*RuleSet*) globale est appelée pour traiter un ensemble d'éléments, toutes les règles de dépendances correspondant à celle-ci sont sélectionnées ainsi que, le cas échéant, les règles de dépendances liées, du fait des dépendances, directement ou indirectement, à ces règles initialement sélectionnées. Parmi ces règles sélectionnées, certaines, liées à des éléments de la liste d'éléments, sont mises en oeuvre et d'autres, liées directement ou indirectement à des règles mises en oeuvre, le sont également. Certaines règles sélectionnées peuvent ainsi ne pas être mises en oeuvre.

Ainsi, selon l'exemple donné en annexe A2, si la commande globale *start* est appelée, toutes les règles de dépendance correspondant à cette commande, dont la règle de dépendance *nodeOn,* sont sélectionnées. Il est observé que parmi ces règles sélectionnées, la règle de dépendance *ColddoorStart* (non représentée) est mise en oeuvre si la règle de dépendance *nodeOn* est mise en oeuvre du fait de la dépendance.

De même, selon l'exemple donné en annexe A2, si la commande globale *stop* est appelée, toutes les règles de dépendance correspondant à cette commande, dont les règles de dépendance *nodeOff, colddoorOff, daOff, nfsDown et unmountNFS* sont sélectionnées.

Après avoir identifié un ensemble initial d'éléments (liste d'éléments), un ensemble de règles de dépendances et un ensemble d'éléments dont dépendent les éléments de l'ensemble initial d'éléments, il est possible de générer un graphe de règles qui est avantageusement utilisé pour générer un graphe de dépendances. Une telle étape est ici réalisée dans le générateur de graphe.

Le graphe de règles est créé à partir de toutes les règles de dépendances identifiées et mises en oeuvre, selon les relations de dépendances et les pondérations associées identifiées ici dans le champ *DependsOn.*

Le graphe de règles permet, par itération, de construire un graphe de dépendances entre tous les éléments identifiés.

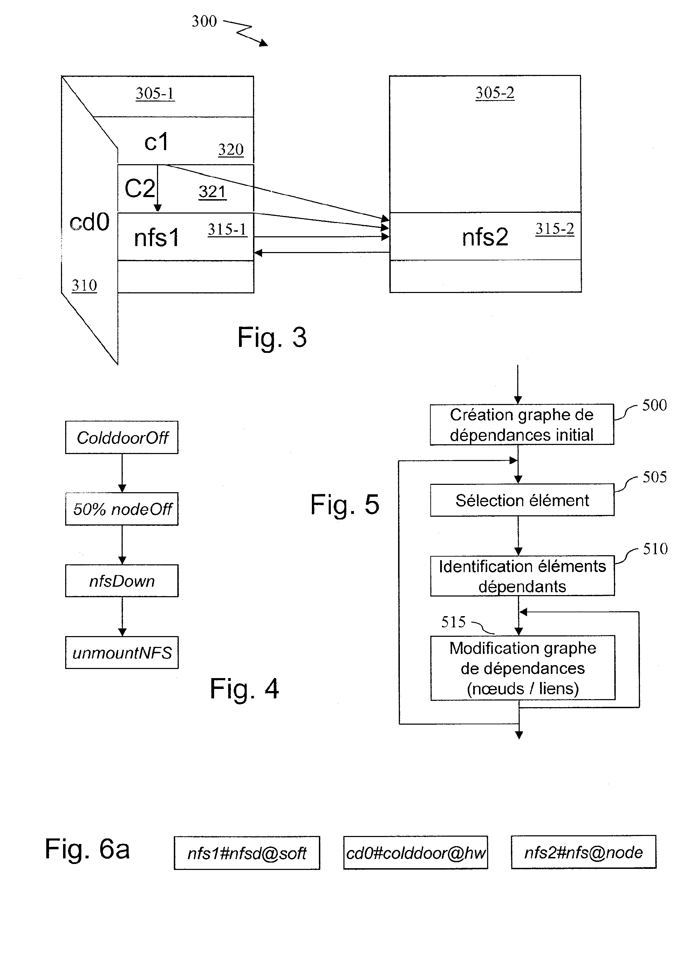

A titre d'illustration, il est considéré ici un cluster (particulièrement simplifié) comprenant plusieurs éléments informatiques liés les uns aux autres par des relations de dépendances dont certaines sont illustrées sur la figure 3. Le cluster 300 comprend deux armoires informatiques 305-1 et 305-2. L'armoire informatique 305-1, refroidie par une porte froide 310 (appelée *cd0*), comprend un serveur 315-1 de type NFS (appelé *nfs1*) et deux noeuds de calcul 320,321(appelé respectivement *c1,c2*) tandis que l'armoire informatique 305-2 comprend un serveur 315-2 de type NFS (appelé *nfs2*). Il est supposé que le serveur *nfs1* est un client du serveur *nfs2,* que, réciproquement, le serveur *nfs2* est un client du serveur *nfs1* et que les noeuds de calcul *c1* et *c2* sont des clients des serveurs *nfs1* et *nfs2.*

L'objet est ici d'arrêter (commande globale d'administration *stop*) le démon NFS du serveur *nfs1* (élément *nfs1#nfsd@soft* dans la liste d'éléments visés par la commande d'administration considérée), d'éteindre la porte froide *cd0* (élément *cdo#coiddoor*@*hw* dans la liste d'éléments visés par la commande d'administration considérée) et d'arrêter le serveur *nfs2* (élément *nfs2#nfs*@*node* dans la liste d'éléments visés par la commande d'administration considérée).

Les contraintes sont d'éteindre au moins un des noeuds de calcul *c1*, *c2 (nodeOff 50%)* avant la porte froide *cd0* (*colddoorOff*), d'arrêter les démons NFS (*nfsDown*) sur les serveurs *nfs1* et *nfs2,* d'afficher une alerte (*unmountNFS*) pour chaque client des serveurs NFS (afin d'alerter de l'arrêt des serveurs NFS) et d'arrêter le serveur *nfs2* (*nodeOff*). Ces contraintes peuvent s'exprimer sous forme de graphe de règles comme illustré sur la figure 4. Comme indiqué précédemment, l'ordre des règles de dépendances peut notamment être déterminé selon les indications associées à chacune d'elles, par exemple les indications du champ *DependsOn* décrites précédemment.

La figure 5 illustre certaines étapes d'un exemple d'algorithme récursif utilisé pour générer un graphe de dépendances conformément à un mode de réalisation de l'invention. Une première étape (étape 500) a pour objet de créer un graphe de dépendances initial. Ce dernier comprend, de préférence, tous les éléments de la liste d'éléments (référence 215 sur la figure 2) visés par la commande globale d'administration considérée.

Une étape suivante (étape 505) consiste à sélectionner un élément dans le graphe de dépendances en cours de construction. De façon avantageuse, l'élément sélectionné est choisi à partir du graphe de règles, comme étant le premier élément d'une racine du graphe de règles (dans lequel des racines ont éventuellement été virtuellement supprimées au cours de la construction du graphe de dépendances). Si aucun élément ne correspond à une racine du graphe de règles, ces racines sont supprimées (virtuellement) et l'étape est répétée avec le graphe de règles résultant.

Les éléments dépendants de l'élément sélectionné sont alors identifiés (étape 510). Comme décrit précédemment, ces éléments sont, de préférence, identifiés à l'aide des règles de dépendances qui leur sont associées et des scripts du champ *DepsFinder.*

Ces éléments sont ajoutés au graphe de dépendances en cours de construction puis des liens de dépendances entre les éléments du graphe de dépendances sont ajoutés (étape 515). Les éléments ajoutés sont à leur tour traités (en fonction des règles de dépendances définies dans le champ *DependOn* associé au champ *DepsFinder* ayant conduit à l'identification de ces éléments) pour déterminer s'ils dépendent d'autres éléments et le cas échéant pour identifier la pondération de la dépendance. L'étape 515 est ainsi exécutée de façon récursive. Si un élément ne dépend pas d'autres éléments, l'action qui lui est associée (définie dans le champ *action* de la règle de dépendances) est mémorisée et l'élément suivant (en remontant dans la hiérarchie du graphe de dépendance) est traité pour déterminer si tous les éléments dont il dépend ont été traités et, le cas échéant, mémoriser l'action associée.

Lorsque tous les éléments identifiés et ajoutés au graphe de dépendances ont été traités, un autre élément du graphe de dépendances, non encore traité, est, le cas échéant, sélectionné (étape 505). Comme indiqué précédemment, si aucun élément n'est associé à une racine du graphe de règles, ces racines sont supprimées (virtuellement) et l'étape est répétée avec le graphe de règles résultant.

L'algorithme prend fin lorsque tous les éléments informatiques du cluster associés au graphe de règles (et les éléments informatiques qui en dépendent) ont été traités.

Ainsi, un graphe de dépendances est ici créé à partir des éléments présents dans la liste d'éléments en ajoutant des éléments dépendants en fonction de règles de dépendance, en ajoutant des liens de dépendance et en modifiant les noeuds du graphe pour ajouter des actions selon les règles de dépendances visées. En d'autres termes, lorsqu'un élément est traité à travers une règle de dépendance, le script *DepsFinder* est appelé. Les éléments déterminés par ce script, sur lesquels une action doit être effectuée avant d'effectuer l'action visée sur l'élément traité, ne figurant pas dans le graphe de dépendances, sont ajoutés à celui-ci. Tous les éléments devant être traités (éléments de la liste d'éléments et éléments dont dépendent ces éléments) forment un ensemble d'éléments à traiter. Lorsqu'un élément est traité, il est retiré de cet ensemble. Le processus de génération du graphe de dépendances prend fin lorsque cet ensemble est vide.

L'algorithme décrit en référence à la figure 5 est maintenant illustré, en référence aux figures 6a à 6f, selon l'exemple illustré sur les figures 3 et 4.

La première étape de l'algorithme de construction du graphe de dépendances consiste à créer un graphe comprenant les éléments spécifiés dans la liste d'éléments sur lesquels doit être appliquée la commande d'administration visée, c'est-à-dire, selon l'exemple décrit en référence à la figure 3, le démon *nfs1* (*nfs1#nfsd*@*soft*), la porte froide *cd0* (*cd0#colddoor*@*hw*) et le serveur *nfs2* (*nfs2#nfs*@*node*), comme représenté sur la figure 6a.

Comme représenté sur la figure 4, le graphe de règles lié à cet exemple ne comprend qu'une racine visant la règle d'arrêt d'une porte froide (*colddoorOff*). Cette règle est ici associée à la porte froide *cd0.* Cet élément est donc sélectionné comme premier élément conformément à l'étape 505.

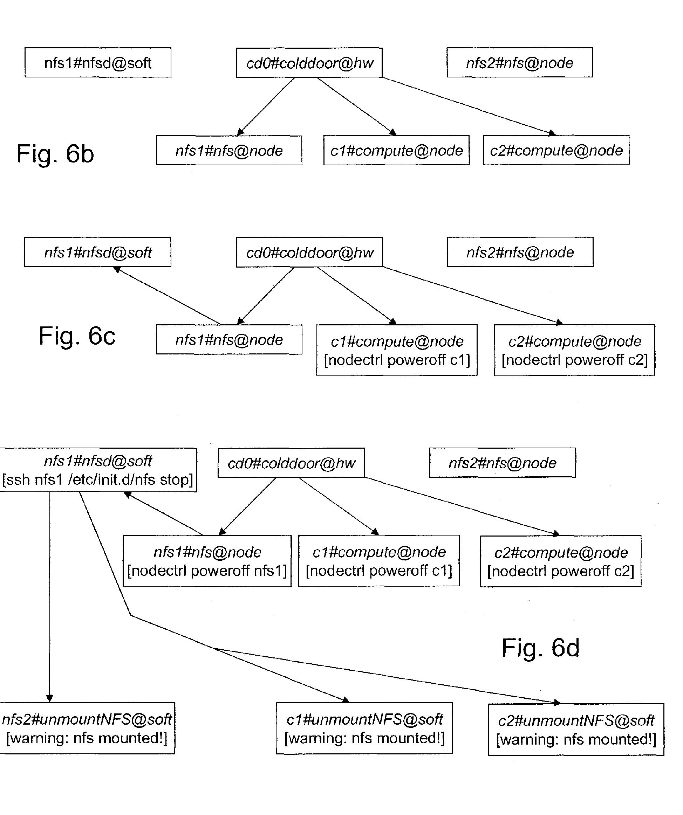

Le script *DepsFinder* lié à l'arrêt de la porte froide *cd0* permet d'identifier le serveur de calcul *c1* (*c1#compute*@*node*), le serveur de calcul *c2* (*c2#compute*@*node*) ainsi que le serveur *nfs1* (*nfsl#nfs*@*node*). Ces éléments sont alors ajoutés au graphe de dépendances avec les liens de dépendances correspondant, comme illustré sur la figure 6b.

Le noeud *c1* est ensuite sélectionné ainsi que la règle de dépendance *nodeOff* (liée à la règle d'arrêt de la porte froide *cd0*). Le script *DepsFinder* correspondant ne retourne rien (l'arrêt du noeud ne dépend ici d'aucun autre élément). L'action de la règle associée au noeud c1 est mémorisée (comme illustré sur la figure 6c). Cette action vise une fonction de contrôle de noeud (*nodectrl*) ayant pour paramètres *poweroff* afin de préciser le type de contrôle à effectuer (arrêt d'un noeud) et *c1* pour identifier le noeud sur lequel porte l'action. Le noeud *c2* est traité de façon similaire.

De façon similaire, le noeud *nfs1* est traité. A nouveau, la règle de dépendance *nodeOff* (liée à la règle d'arrêt de la porte froide *cd0*) s'applique ici. Le script *DepsFinder* correspondant identifie le démon NFS associé (*nfs1#nfsd*@*soft*). Cet élément est alors ajouté au graphe de dépendances avec le lien de dépendance correspondant (comme illustré sur la figure 6c).

De façon récursive, l'élément *nfs1#nfsd*@*soft* est traité. Trois nouveaux éléments (clients NFS liés aux noeuds *c1, c2* et *nfs2*) sont alors créés (*c1#unmountNFS*@*soft, c2#unmountNFS@soft* et *nfs2#unmountNFS*@*soft*) dans le graphe de dépendances avec les liens de dépendances correspondants. Ces nouveaux éléments n'ayant pas de dépendance, les actions associées sont mémorisées, puis celles de l'élément *nfs1#nfsd*@*soft* et finalement celles de l'élément *nfs1#nfs*@*node,* comme illustré sur la figure 6d.

Dans une itération suivante, l'action associée à la porte froide est mémorisée.

Dans la liste d'éléments, comprenant le démon *nfs1* (*nfs1#nfsd*@*soft*), la porte froide *cd0* (*cd0#colddoor*@*hw*) et le serveur *nfs2* (*nfs2#nfs*@*node*), seule la porte froide *cd0* a été traitée. Cependant, en traitant la porte froide *cd0,* le démon *nfs1* a été incidemment traité. Par conséquent, il ne reste que le serveur *nfs2* (*nfs2#nfs*@*node*) à traiter. A nouveau, le premier élément associé à une racine du graphe de règles (représenté sur la figure 4) est recherché. Aucun élément n'étant associé à la racine *ColddoorOff* (la porte froide *cd0* a déjà été traitée et il n'y a pas d'autre élément), cette racine est retirée (virtuellement) du graphe de règles. Dans le graphe de règles résultant, c'est la règle *nodeOff* qui est la racine. Le serveur *nfs2,* correspond à la règle *nodeOff,* est donc sélectionné.

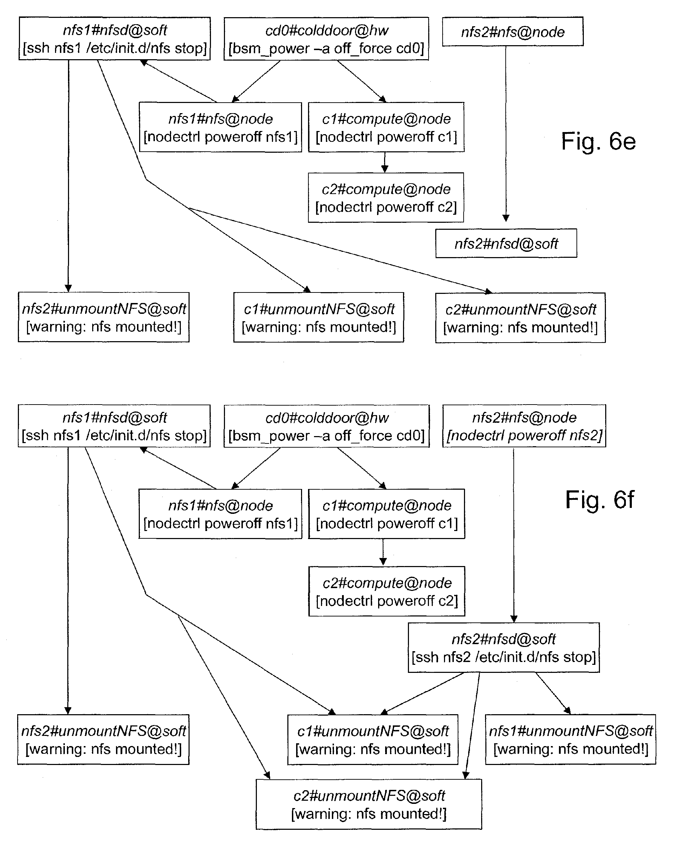

Le script *DepsFinder* associé au serveur *nfs2* selon la règle *nodeOff* permet d'identifier le démon *nfs2* (*nfs2*@*nfsd*@*soft*). Cet élément est donc ajouté au graphe de dépendance avec le lien de dépendance correspondant, comme illustré sur la figure 6e.

Le démon *nfs2* est alors sélectionné pour déterminer ses dépendances, ici *c1#unmountNFS*@*soft c2#unmountNFS*@*soft* et *nfs1#unmountNFS*@*soft.* Les éléments *c1#unmountNFS*@*soft* et *c2#unmountNFS*@*soft* ayant déjà été ajoutés au graphe de dépendances, seul l'élément *nfs1#unmountNFS*@*soft* est ajouté à ce graphe, un lien de dépendance étant ajouté vers chacun de ces éléments. De façon récursive, il est déterminé que ces éléments n'ont pas de dépendance. Les actions associées à ces éléments sont alors mémorisées.

Il est observé ici que, de préférence, une même action ne peut être mémorisée deux fois pour un même noeud. Cependant, des actions différentes, provenant de règles de dépendances différentes, peuvent être associées à un même noeud du graphe de dépendances. En d'autres termes, une règle de dépendances donnée ne peut être appliquée qu'une seule fois à un élément donné alors que plusieurs règles de dépendances distinctes peuvent être appliquées à un même élément ce qui peut entraîner l'association de plusieurs actions à un même noeud du graphe de dépendances.

En remontant dans la structure du graphe de dépendances, il est ensuite possible d'associer les actions aux éléments dépendants des éléments précédemment traités comme illustré sur la figure 6f qui représente le graphe de dépendance à partir duquel peut être générée une séquence d'instructions.

Il est observé ici que, si un cycle est observé dans le graphe de dépendances, il peut être mis fin au procédé et le problème peut être signalé à un utilisateur.

Plusieurs algorithmes peuvent être utilisés pour générer une séquence d'instructions, pour exécuter les actions à partir d'un graphe de dépendances. Cependant, quelque soit l'algorithme utilisé, une séquence d'instructions est avantageusement représentée sous forme d'un fichier de type XML (sigle d'*eXtensible Markup Language* en terminologie anglo-saxonne), pour être facilement lisible et modifiable par un utilisateur.

Selon un premier mode de réalisation, une séquence d'instructions est obtenue à partir d'un graphe de dépendances selon un algorithme standard de tri topologique. La séquence d'instructions obtenue correspond à un parcours trivial du graphe, garantissant le respect des contraintes. Cependant, si un tel algorithme est facile à mettre en oeuvre et respecte les contraintes déterminées, il ne permet pas une exécution de façon parallèle de certaines instructions. En outre, si une instruction ne peut être exécutée (par exemple suite à une erreur d'exécution), les instructions suivantes peuvent, selon le mode d'exécution choisi, ne pas être exécutées, même si elles ne dépendent pas de l'instruction ne pouvant être exécutée.

Selon un autre mode de réalisation, les instructions sont organisées de telle façon à être exécutées en parallèle. Les instructions dont l'exécution dépend de l'exécution d'autres instructions sont mises en attentes jusqu'à l'exécution de ces dernières. Dès qu'une instruction ou qu'un ensemble d'instructions est exécuté avec succès, celles qui en dépendent sont exécutées. Un tel mode de réalisation offre de bonnes performances. Cependant, la représentation des séquences d'instructions ainsi générées est difficilement compréhensible, et donc modifiable, pour un utilisateur.

Un autre mode de réalisation a pour objet de combiner les approches parallèles et séquentielles décrites précédemment, c'est-à-dire, par exemple, d'exécuter des instructions en parallèle par niveaux. A ces fins, les sommets du graphe de dépendances représentant des feuilles sont identifiés. Ces sommets correspondent, dans l'exemple décrit en référence à la figure 6, aux éléments suivants,
- *c1#unmountNFS*@*soft* [warning: nfs mounted!];
- *c2#unmountNFS*@*soft* [warning: nfs mounted!];
- *nfs1#unmountNFS*@*soft* [warning: nfs mounted!];
- *nfs2#unmountNFS*@*soft* [warning: nfs mounted!];
- *c1#compute*@*node* [nodectrl poweroff c1]; et,
- *c2#compute*@*node* [nodectrl poweroff c2].

Les instructions associées à ces sommets forment alors un premier ensemble d'instructions qui peuvent être exécutées, par groupe (chaque groupe correspondant à un sommet), de façon parallèle.

Les sommets ainsi identifiés sont alors retirés (virtuellement) du graphe de dépendances et les sommets du graphe de dépendances résultant représentant des feuilles sont identifiés. Ces sommets correspondent, dans l'exemple considéré, aux éléments suivants,
- *nfs1#nfsd*@*soft* [ssh nfs1 /etc/init.d/nfs step] ; et
- *nfs2#nfsd*@*soft* [ssh nfs2 /etc/init.d/nfs step].

Les instructions associées à ces sommets forment alors un second ensemble d'instructions qui peuvent être exécutées, par groupe (chaque groupe correspondant à un sommet), de façon parallèle, après que le premier ensemble d'instructions ait été exécuté.

A nouveau, les sommets identifiés sont retirés (virtuellement) du graphe de dépendances et les sommets du graphe de dépendances résultant représentant des feuilles sont identifiés. Ces sommets correspondent, dans l'exemple considéré, aux éléments suivants,
- *nfs1#nfs*@*node* [nodectrl poweroff nfs1]; et,
- *nfs2#nfs*@*node* [nodectrl poweroff nfs2].

Les instructions associées à ces sommets forment alors un troisième ensemble d'instructions qui peuvent être exécutées, par groupe (chaque groupe correspondant à un sommet), de façon parallèle, après que les premier et second ensembles d'instructions aient été exécutés.

A nouveau, les sommets identifiés sont retirés (virtuellement) du graphe de dépendances et les sommets du graphe de dépendances résultant représentant des feuilles sont identifiés. Les instructions associées au seul sommet restant (*cd0#colddoor*@*hw* [bsm_power -a off_force cd0]) forment alors un quatrième ensemble d'instructions qui peuvent être exécutées en parallèle, après que les premier, second et troisième ensembles d'instructions aient été exécutés.

L'annexe A3 illustre un exemple de fichier XML correspondant à un tel mode de réalisation. La balise <*seq*> indique une section de groupes d'instructions devant être traités de façon séquentielle tandis que la balise *<par>* indique des sections de groupes d'instructions devant être traités de façon parallèle. Ainsi, par exemple, le groupe d'instructions comprenant les identifiants 1, 2, 3 et 4 doit être traité avant le groupe d'instructions comprenant les identifiants 5 et 6 alors que les instructions liées aux identifiants 1, 2, 3 et 4 sont avantageusement traitées de façon parallèle.

Une telle représentation est facilement compréhensible par un utilisateur qui peut ainsi la modifier pour, le cas échéant, l'adapter.

Selon un autre mode de réalisation, un seul groupe d'instructions
parallèle (<par> XML tag) est générée incluant pour chaque noeud du graphe de dépendance, une instruction dont les dépendances sont explicitement mentionnées à l'aide d'un attribut particulier.

Dans un autre mode de réalisation une séquence d'instructions (optimal) est générée d'une façon plus lisible de type XML. Des dépendances implicites générées par des instructions séquentielles sont utilisées.Une séquence d'instructions ainsi générée peut alors être exécutée. De façon avantageuse, les actions visées par les instructions sont unitaires (chaque instruction ne vise qu'un élément) et atomiques (obtention d'une indication du résultat d'exécution de l'instruction) afin de contrôler l'exécution de la séquence d'instructions.

L'atomicité peut notamment être obtenue par la réception d'une indication d'exécution d'instruction de type *OK* si l'instruction a été correctement exécutée, *NOK* si l'instruction n'a pas été correctement exécutée ou *WARNING* si l'exécution de l'instruction peut engendrer une perturbation d'éléments du cluster (par exemple l'arrêt d'un serveur NFS alors qu'un noeud est client de ce serveur). Dans le cas d'un *WARNING,* l'exécution d'une instruction liée à un élément dépendant de l'exécution de cette instruction ayant produit un WARNING peut être soumise à une acceptation d'un utilisateur ou forcée par le système selon un mode d'exécution sélectionné (par exemple forcé ou non). L'indication *OK* peut, dans certains modes de réalisation, constituer une contribution à traiter par une instruction dépendante de l'exécution de cette instruction.

Il est ainsi possible de gérer les pannes pour, par exemple, ne pas arrêter une porte froide si au moins 50% des noeuds ne sont pas arrêtés (par exemple si un noeud refuse de s'arrêter).

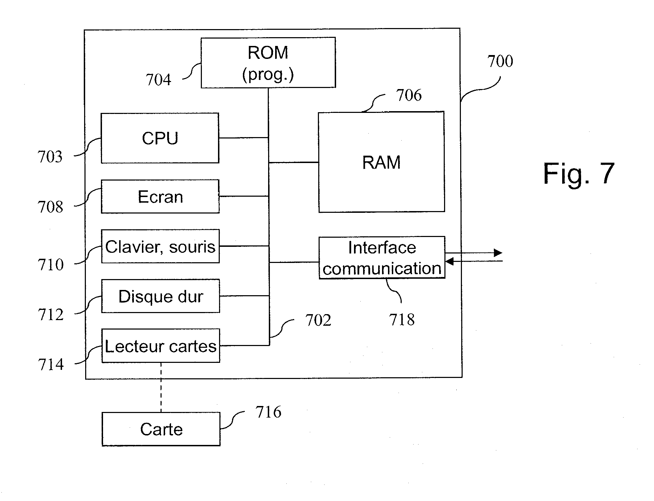

Un dispositif adapté à mettre en oeuvre l'invention ou une partie de l'invention, notamment les algorithmes décrits en référence aux figures 2 et 5, est illustré sur la figure 7. Le dispositif 700 est par exemple un ordinateur de type PC (sigle de *Personal Computer* en terminologie anglo-saxonne).

Le dispositif 700 comporte ici un bus de communication 702 auquel sont reliés :
- une unité centrale de traitement ou microprocesseur 703 (ou CPU, sigle de *Central Processing Unit* en terminologie anglo-saxonne) ;
- une mémoire morte 704 (ROM, acronyme de *Read Only Memory* en terminologie anglo-saxonne) pouvant comporter les programmes "Prog" ;
- une mémoire vive ou mémoire cache 706 (RAM, acronyme de *Random Access Memory* en terminologie anglo-saxonne) comportant des registres adaptés à enregistrer des variables et paramètres créés et modifiés au cours de l'exécution des programmes précités ; et,
- une interface de communication 718 adaptée à transmettre et à recevoir des données.

De préférence, le dispositif 700 dispose en outre :
- d'un écran 708 permettant de visualiser des données et/ou de servir d'interface graphique avec l'utilisateur qui pourra interagir avec les programmes selon l'invention, à l'aide d'un clavier et d'une souris 710 ou d'un autre dispositif de pointage tel qu'un crayon optique, un écran tactile ou une télécommande ;
- d'un disque dur 712 pouvant comporter les programmes "Prog" précités et des données traitées ou à traiter selon l'invention ; et,
- d'un lecteur de cartes mémoires 714 adapté à recevoir une carte mémoire 716 et à y lire ou à y écrire des données traitées ou à traiter selon l'invention.

Le bus de communication permet la communication et l'interopérabilité entre les différents éléments inclus dans le dispositif 700 ou reliés à lui. La représentation du bus n'est pas limitative et, notamment, l'unité centrale est susceptible de communiquer des instructions à tout élément du dispositif 700 directement ou par l'intermédiaire d'un autre élément du dispositif 700.

Le code exécutable de chaque programme permettant au dispositif programmable de mettre en oeuvre les processus selon l'invention, peut être stocké, par exemple, dans le disque dur 712 ou en mémoire morte 704.

Selon une variante, la carte mémoire 716 peut contenir des données ainsi que le code exécutable des programmes précités qui, une fois lus par le dispositif 700, sera stocké dans le disque dur 712.

Selon une autre variante, le code exécutable des programmes pourra être reçu, au moins partiellement, par l'intermédiaire de l'interface 718, pour être stocké de façon identique à celle décrite précédemment.

De manière plus générale, le ou les programmes pourront être chargés dans un des moyens de stockage du dispositif 700 avant d'être exécutés.

L'unité centrale 703 va commander et diriger l'exécution des instructions ou portions de code logiciel du ou des programmes selon l'invention, instructions qui sont stockées dans le disque dur 712 ou dans la mémoire morte 704 ou bien dans les autres éléments de stockage précités. Lors de la mise sous tension, le ou les programmes qui sont stockés dans une mémoire non volatile, par exemple le disque dur 712 ou la mémoire morte 704, sont transférés dans la mémoire vive 706 qui contient alors le code exécutable du ou des programmes selon l'invention, ainsi que des registres pour mémoriser les variables et paramètres nécessaires à la mise en oeuvre de l'invention.

Naturellement, pour satisfaire des besoins spécifiques, une personne compétente dans le domaine de l'invention pourra appliquer des modifications dans la description précédente.

### ANNEXE

*Calcul_[1-31#isiet*@*hw_group*
*CC-[1-10]#CC*@*rack*
*bullx[10-11]#mds*@*node*
*bullx[12-20]#compute*@*node*
*hwm[101-110]#bmc*@*hwmanager*
*colddoor[0-5]#coldoor*@*hwmanager*
*esw-CU[2-3]-1#eth*@*switch*
*foo[1-5]#bar*@*soft*

### A1 : exemple de liste d'éléments

| **Rule Set** | **Symbolic name** | **Comp. type** | **Filter** | **Action** | **Deps Finder** | **Depends On** | **Comments** |
|---|---|---|---|---|---|---|---|
| Stop | *nodeOff* | *compute @node OR nfs* @*node* | all | Nodectrl poweroff %comp. | find_nod e_ deps %comp. | nfsDown 20% | Powering off compute and nfs nodes |
| Start | *nodeOn* | *compute* @*node* | %name !∼ compute 12 | nodectrl poweron %comp. | find_ nodeon_ deps %name | Colddoor Start 100% | Power on cold door before nodes |
| Stop | colddoorOff | colddoor @hw | all | Bsm_powe r off %comp. | find_ colddoor Off_dep %comp. | nodeOff 50% | Power off nodes before a cold door |
| **···** | **···** | **···** | **···** | **···** | **···** | **···** | **···** |
| Stop | *daOff* | *all*@*da* | Bash -c '[[ %comp. =.* ]]' | da_admin poweroff \ %comp. | find_da_ deps %comp. | ioServer Off 100% | Powering off disk arrays requires their clients to be powered off first |
| Stop | *nfsDown* | *nfsd*@*soft* | all | ssh %comp. /etc/init.d/n fs stop | Find_nfs client %comp. | unmount NFS 100% | Stopping NFS daemons: take care of clients |
| Stop | *unmountNFS* | *unmount NFS*@*soft* | all | Waming : nfs mounted ! | none | none | Display a warning message for each client |

### A2 : exemple de règles de dépendances

```
 <seq>
 <par>
  <action component_set="c1#unmountNFS@soft" id="1 ">
   echo "WARNING : nfs mounted";
  </action>
  <action component_set="nfs1#unmountNFS@soft"id="2">
   echo "WARNING : nfs mounted",
  </action>
  <action component_set="nfs2#unmountNFS@soft" id="3">
   echo "WARNING : nfs mounted";
  <laction>
  <action component_set= "c1#compute@node" id="4">
   nodectrl poweroff c1;
  </action>
 </par>
 <par>
  <action component_set="nfs1#nfsd@soft" id="5">
   ssh nfs1 /etc/init.d/nfs stop
  <laction>
  <action component_set="nfs2#nfsd@soft" id="6">
   ssh nfs2 /etc/init.d/nfs stop
  <laction>
 </par>
 <par>
  <action component_set="nfs1#nfs@node"id="7">
   nodectrl poweroff nfs1
  <laction>
  <action component_set="nfs2#nfs@node" id="8">
   nodectrl poweroff nfs2
  <laction>
 </par>
 <action component_set="cd0#Coldoor@hw" id="9">
  nodectrl poweroff cd0
 <laction>
 </seq>
```

### A3 : exemple de fichier XML représentant une séquence d'instructions

```
 <seq>
  <action id="1" provides="a'/>
  <par>
     <action id="2" provides="b" requires="a:0"/>
    <action id="3" provides="b" requires="a:100"/>
     <action id="4" provides="c" requires="a:50"/>
  </par>
  <par>
     <action id="5" provides="d">
    <action id="6" provides="d" requires="b:100,c:0",/>
     <action id="7" provides="e" requires="b:0,c:100"/>
  </par>
  <par>
    <action id="8" deps="1" provides="e" requires="a:0, d:50, e:100',/>
    <action id="9" deps="1, 2, 3, 4" provides="f" requires="a: 50, b: 50, c:50 ''/>
  </par>
  <action id="10"/>
  </seq>
```

### A4 : exemple de fichier XML représentant une séquence d'instructions pour

| | |
|---|---|
| l'exécution des actions | 1 à 10 |

## Revendications

1. Procédé, pour ordinateur, de traitement d'une commande globale visant une pluralité d'éléments informatiques d'un ensemble d'éléments informatiques (105), ladite commande globale visant l'exécution d'une action respective sur chaque élément informatique de la pluralité d'éléments informatiques (105), chaque élément informatique ayant un type d'élément, les liens de dépendance entres les éléments selon la commande étant définis par des règles de dépendance, ce procédé comportant pour chaque action visée :
- identification de l'élément informatique visé par l'action ;
- identification, selon au moins une règle de dépendance liée à la commande, des éléments informatiques de la pluralité d'éléments informatiques qui doivent être traités avant l'élément informatique visé ;
- identification, pour chaque type d'élément qui doit être traité préalablement, d'une pondération représentative de la proportion des éléments informatiques de ce type pour laquelle l'action correspondante doit être achevée avec succès avant d'exécuter l'action visée ; et
- exécution de l'action visée sur ledit élément informatique visé dans le cas où pour chaque type d'élément qui doit être traité préalablement les actions correspondantes sont achevées avec succès pour une proportion des éléments informatiques de ce type au moins égale à la pondération respective.

2. Procédé selon la revendication 1 dans lequel l'exécution d'une action sur un premier élément informatique génère une contribution, cette contribution étant traitée pour déterminer si l'action sur un élément informatique qui dépend sur le premier élément peut être exécutée ou pas.

3. Procédé selon la revendication 1 ou 2 dans lequel les actions visées par la commande globale sont traitées selon une séquence d'instructions ordonnée déterminée à partir d'un graphe de dépendances, le graphe de dépendances étant généré à partir des règles de dépendances et une liste des éléments informatiques visés par la commande globale.

4. Procédé selon la revendication 3 selon lequel une fonction d'identification d'éléments et une règle de dépendance sont associées à ladite au moins une règle de dépendance liée à la commande, le procédé comprenant en outre une étape d'identification d'au moins ledit autre élément à partir de ladite fonction d'identification, ledit graphe de dépendances étant généré à partir dudit au moins un élément identifié, dudit au moins un autre élément, de ladite au moins une règle de dépendance identifiée et de ladite règle de dépendance associée à ladite au moins une règle de dépendance liée à la commande.

5. Procédé selon l'une quelconque des revendications précédentes comprenant en outre une étape d'affichage d'informations relatives audit graphe de dépendances, ladite étape de génération de ladite séquence d'instruction étant effectuée en réponse à une validation (235) desdites informations affichées relatives audit graphe de dépendances.

6. Procédé selon l'une quelconque des revendications 3 à 35selon lequel la génération d'un graphe de dépendances est récursive et comprend les étapes suivantes,
- création (500) d'un graphe de dépendances initial comprenant au moins ledit au moins un élément ;
- sélection (505) d'un élément dans ledit graphe de dépendances
- identification (510) d'au moins un élément dont dépend ledit élément sélectionné au regard d'une règle de dépendance ; et,
- modification (515) dudit graphe de dépendances selon ledit élément sélectionné et ledit au moins un élément identifié dont dépend ledit élément sélectionné au regard d'une règle de dépendance.

7. Procédé selon la revendication 6 selon lequel ladite étape de sélection d'un élément dans ledit graphe de dépendances est basée sur un graphe de règles, ledit graphe de règles étant une représentation ordonnée de ladite au moins une règle de dépendance identifiée et de règles de dépendances directement ou indirectement associées à ladite au moins une règle de dépendance identifiée.

8. Procédé selon l'une quelconque des revendications 3 à 7 selon lequel la séquence d'instructions comprend au moins un groupe d'instructions pour chaque niveau dudit graphe de dépendances.

9. Procédé selon la revendication précédente selon lequel ladite séquence d'instructions est générée sous forme d'un fichier de type XML, une balise de niveau étant associée à chaque niveau dudit graphe de dépendances et une balise de groupe étant associée à chaque groupe d'instructions pour chaque balise de niveau correspondant à un niveau pour lequel il existe au moins deux groupes d'instructions distincts.

10. Procédé selon l'une quelconque des revendications 2 à 9 comprenant en outre une étape d'exécution de ladite séquence d'instructions.

11. Procédé selon la revendication 10 comprenant en outre une étape d'affichage d'informations relatives à ladite séquence d'instructions, ladite étape d'exécution de ladite séquence d'instructions étant effectuée en réponse à une validation (245) desdites informations affichées relatives à ladite séquence d'instructions.

12. Procédé selon la revendication 9 ou la revendication 10, dépendance de la revendication 9, selon lequel des instructions relatives à deux niveaux distincts du graphe de dépendances sont exécutées de façon séquentielle et selon lequel des instructions de groupes d'instructions distincts d'un même niveau du graphe de dépendances sont exécutées de façon parallèle.

13. Programme d'ordinateur comprenant des instructions adaptées à la mise en oeuvre de chacune des étapes du procédé selon l'une quelconque des revendications précédentes lorsque ledit programme est exécuté sur un ordinateur.

14. Dispositif comprenant des moyens adaptés à la mise en oeuvre de chacune des étapes du procédé selon l'une quelconque des revendications 1 à 12.
